# EUROPEAN PATENT SPECIFICATION

(11) **EP 1 003 098 B1**
(45) Date of publication and mention of the grant of the patent: **07.09.2005**
(21) Application number: 99308540.6
(22) Date of filing: 28.10.1999
(51) Int. Cl.: G06F 9/44, G06F 9/46

(54) **Method and system for displaying and sending information**
Verfahren und System zum Darstellen und Senden von Nachrichten
Procédé et système d'affichage et d'envoi d'informations

(30) Priority: 30.10.1998 US 183159
(43) Date of publication of application: 24.05.2000
(73) Proprietor: FUJITSU LIMITED, Kanagawa 211-8588 (JP)
(72) Inventor: Kumazawa, Takeshi, Tokyo 156-0043 (JP); Araki, Hirokatsu, California 95014 (US); Takahashi, Tadashi, California 94086 (US); Hirao, Tsuyoshi, California 95129 (US); Matsumoto, Hitoshi, California 95032 (US)
(74) Representative: Stebbing, Timothy Charles

(56) References cited:
- EP-A- 0 674 408
- US-A- 5 801 700
- "MICROSOFT OFFICE 97 BINDER QUESTIONS AND ANSWERS" , [Online] 2003, pages 1-4, XP002239098 Retrieved from the Internet: <URL:http://support.microsoft.com/default. aspx?scid=/support/office/content/office97 /binder.asp> [retrieved on 2003-04-23]
- "UNIFIED, CUSTOMIZABLE APPLICATION BAR" IBM TECHNICAL DISCLOSURE BULLETIN, IBM CORP., NEW YORK, US, vol. 40, no. 10, 1 October 1997 (1997-10-01), page 77 XP000739428 ISSN: 0018-8689
- "PRODUCT LIFECYCLE DATES - OFFICE PRODUCT FAMILY" , [Online] 8 April 2003 (2003-04-08), pages 1-5, XP002239099 Retrieved from the Internet: <URL:http://support.microsoft.com/default. aspx?scid=fh;en-us;LifeOfficeFam> [retrieved on 2003-04-23]

## Description

The present invention relates to iconic graphical user interfaces for computers. For example, the present invention may be applied to such interfaces for managing associated files using a Windows applied programming interface.

The functionality of a computer is improved by an intuitive user interface. The user interface for a computer is typically a software program running on the computer's central processing unit (CPU) which responds to certain user commands. As computers have increased in popularity the quality of the user interface has become an increasingly important consideration.

A popular computer interface for personal computers is a graphical user interface (GUI) with a so-called "desktop" environment and a "Windows" interface. A windowing interface system is a software package that allows the user to monitor and control different contexts by separating them physically onto different parts of a display screen. In the desktop metaphor, which is used in MICROSOFT® Windows '95® and other common software programs, the user can open a window to reveal files and/or application programs contained in the window. For example, to open a file the computer user simply double clicks on the icon representing that file and the file window opens.

The desktop metaphor also typically includes icons to represent files, documents, and computer applications. An "icon" is a common term used to describe an image representing a file, a user, a directory, a program, or other attribute or symbol representing an object. In many common desktop GUIs, a computer user can manipulate documents or files on a desktop by clicking and dragging icons across the desktop using a computer mouse or other cursor control device, such as a touchpad. As another example, to delete a file, the computer user may drag the icon representing the file over an icon representing a trash receptacle and drop the icon representing the file onto the icon representing the trash receptacle.

A common desktop icon is that of a "folder." A folder is an icon that is typically shaped like a conventional folder. A folder may be used to store documents, programs, or other types of files. The user may open the folder, typically by double-clicking upon the folder. This reveals either icons or a window listing the documents and programs contained within the folder. The user may then open the programs or documents contained within the folder, typically by double-clicking upon them.

The click drag, and drop features of an iconic GUI interface provides a user friendly interface that is intuitive to use in many common applications. For example, computer users often have several files and documents that they desire to have easy access to as a group. One way that documents can be arranged together is by putting two or more related documents into one folder. For example a project folder may contain copies of all documents related to a particular project, such as project reports, schedule information, and related correspondence.

Unfortunately, there are some document management and transfer functions that conventional iconic folders do not perform as well as desired. One problem is that users often need to file the same document in several different folders. For example, different work projects often need to refer to the same drawings, reports, or other data. Consequently, each folder needs a separate copy of each document or drawing. This is wasteful in terms of computer memory space. Moreover, it may take a considerable length of time for users to copy individual documents into multiple separate folders.

Another drawback with conventional iconic folder approaches is that it is awkward and time consuming to transmit a folder's contents to others by internet or intranet means. For example, in order for a computer user to transmit the contents of a folder, the conventional approach is to launch an e-mail application; input forwarding addresses; select individual files from the folder; attach/append the files to the e-mail message; and to then send the e-mail message. While this can be done, it is not as convenient or as intuitive as desired. Methods to transfer individual files by placing the file upon an icon representing an individual user assist in sending files, but do not solve all of the problems. For example, U.S. Patent No. 5,801,700 discloses an iconic drag and drop interface for electronic file transfer in which a user may drag a first icon representing a file and drop it onto a second file representing the recipient, after which the computer automatically sends the file to the recipient. However, in the case of multiple files, the user must still individually select and send each individual file. Moreover, the user still has the need to send information on the files that are sent, e.g., sending an e-mail message such as "John: I have sent you three files related to the Jones case, which must be completed by August 1, 1999."

Another drawback with conventional means to send files by e-mail is that the data in the file documents must often be converted when the information is appended to an e-mail application. This can be a slow process, particularly if large documents and/or graphics are sent. Still another problem is that there is often the need to send the same information to users who do not have access to internet/intranet communications. For example, many business people must make special arrangements to send the contents of e-mail messages to those colleagues out of the office, such as by transmitting a hard-copy version via facsimile.

Still another drawback with conventional iconic file systems is that they do not address the information management problems associated with commonly used internet and network applications. It is common for many computer users to receive dozens of e-mail messages (and attachments) every day. It is also common for many computer users to access the internet or other computer information services (e.g., LEXIS™) on a regular basis to obtain documents and images. Moreover, some data services, such as DIALOGUE™, have news highlighting and clipping services so that the user receives regular updates on stories of possible interest. In addition to commercial information services, there are also software methods that permit a user to dynamically acquire articles of interest from the World Wide Web. For example, U.S. Patent No. 5,649,186 discloses a system in which a computer user interface is used as part of a dynamic information clipping service to collect, categorize, filter, search, retrieve, and assemble articles of interest from a plurality of news sources that may be accessed by the World Wide Web. Consequently, computer users may regularly receive numerous e-mail messages and/or internet documents related to a project or program. It can be time-consuming to organize these messages and documents; to file them with related documents in a special folder; and to forward them to others.

Conventional file and document management interfaces, such as folders, do not address the problem of managing large numbers of incoming documents and messages which must be efficiently organized, displayed, and communicated to others in order to facilitate project and task management. Moreover, the shortcomings of conventional iconic file systems will become a more widespread problem as more computer users face the challenge of efficiently utilizing large numbers of documents, internet materials, and e-mail messages (internet or network) to achieve project and task objectives.

What is desired is a new iconic file management approach to assist in the efficient utilization of computer files.

"Microsoft Office 97 Binder Questions and Answers", 2003, pages 1-4, XP2239098 discloses the use of so-called "binders" within Microsoft Office 97. A binder is defined as a collection of programs rolled up into one "notebook", such that documents created with each of the programs are saved together in one file. Drag-and-drop of objects from the Window desktop allows documents to be added to a binder.

US-A-5 801 700 discloses a system using drag-and-drop to transfer files from a sender to a recipient. The sender, at a computer with a GUI-based display, drags and drops onto an icon representing the recipient one or more icons representing files to be transmitted.

"Unified, Customizable Application Bar", IBM Technical Disclosure Bulletin, Vol. 40, No. 10, October 1997, XP739428 discloses a desktop display in which a so-called "appbar" has a static area and a dynamic area, the dynamic area providing a continuously-scrolling display of items such as news bulletins and stock ticker information.

According to one aspect of the present invention, there is.provided a system for displaying iconic message objects of data files associated by a common theme in a graphical user interface on a computer with a display, comprising: message object control module means for generating and editing a message object information container in response to a message object generation event; message object instance element means for storing in said information container attribute data including information attributes, display attributes, and a pointer table containing sufficient information to access associated files in said message object information container; display means for displaying said information container on said graphical user interface as a message object icon with an information description; access means for accessing said associated files of said displayed message object icon in response to an access event; iconic drag and drop data conversion and transmission means for dragging said displayed message object icon onto an address list, converting the data of said message object into a form suitable for transmission to addresses on said address list, and transmitting said converted data to individuals on said address list; ticker means for generating a ticker object based on a message received from outside the computer; and ticker conversion means responsive to a user clicking and dragging on a ticker object to initiate the generation of a message object using the information contained in the ticker object.

Other aspects of the present invention provide computer software for implementing the above system, as well as a corresponding method of displaying iconic message objects.

The present invention comprises an iconic means for displaying data by a common theme and preferably includes a means to conveniently transmit the associated data. The present invention generally comprises a message object control module for generating and displaying each message object; a message object instance element means for recording display attribute information, information attribute information, and a pointer to an information table, and a message object control table means for storing control table pointing data for each said message object wherein each said message object generated by said message object control module means is associated to an individual message object instance by the control table pointing data.

In a preferred embodiment, an individual object may be transmitted by dragging and dropping a message object onto an individual post office box icon of a data conversion and transmission unit. The data conversion and transmission unit preferably comprises iconic drag and drop data conversion and transmission means for dragging said displayed message object icon onto an address list, converting the data of said message object into a form suitable for transmission to addresses on said address list, and transmitting said converted data to individuals on said address list.

A detailed description will now be given, by way of example, with reference to the accompanying drawings, in which:
FIG. 1 is a diagram showing an inventive embodiment of a message object display system.
FIG. 2 is a diagram showing an individual message object in the Fig. 1 embodiment and its links to associated documents.
FIG. 3A is a diagram showing a computer display on which a message object is shown.
FIG. 3B shows a message object with an opened command menu window.
FIG. 4 is a diagram of a computer display illustrating how messages displayed on a ticker display may be converted into message objects.
FIG. 5 is a block diagram showing the message object control module of an embodiment of the present invention.
FIG. 6 shows a representation of a message object control table.
FIG. 7 shows a representation of message object instance data.
FIG. 8 is a flow chart showing a preferred method of generating a message object .
FIG. 9 shows a preferred message object property menu.
FIG. 10 is a flow chart showing how the control module launches appropriate applications for associated files.
FIG. 11 shows a data conversion and transmission element that may be used to transmit a message object by a drag and drop operation.
FIG. 12 shows a diagram of a preferred P.O. box control module utilized in the data conversion and transmission element of FIG. 9.
FIG. 13 is a screen display of a preferred embodiment of a ticker.
FIG. 14 is a screen display of the ticker of FIG. 13 with its menu window opened.
FIG. 15 is a screen display of a message board.
FIG. 16 is a screen display of the message board of FIG. 15 with its menu window opened.

The present invention is directed towards a computer interface system or architecture for use with a computer desktop interface which is based upon the windows approach. The inventors have observed that many computer users often attach a plurality of POST-IT™ notes to the sides of their computer screen to serve as a reminder of important project dates and objectives. POST-IT™ notes, manufactured by 3M Inc., have a self-adhesive backing on one side of the note which facilitates attaching a note to hard-copy documents. Additionally, the self-adhesive backing of a POST-IT™ note enables it to be attached to other smooth surfaces, such as the frame of a computer display monitor. Moreover, the inventors of the present application have also recognized that there is an unresolved need for a computer interface system that performs many of the same functions that computer users today utilize time management aids, such as a DAY-TIMER™ to perform. Time management aids, such as the popular DAY-TIMER™ books manufactured by Day-Timer, Inc., typically include spaces for users to write notes describing important things to be done by a particular date. Additionally, the inventors have recognized that computer users often use a personal assistant, such as a secretary, to organize and transmit associated files. Consequently, the inventors of the present application have recognized that there is an unresolved need for a computer interface system that performs many of the same functions that computer users today utilize POST-IT™ notes, DAY-TIMERs™, and personal assistants to perform. In response to these needs recognized by the inventors they have developed a new computer desktop icon system based upon the concept of a computer message object performing the function of a POST-IT™. In addition, the computer message object of the present invention also performs many other valuable file and document management functions.

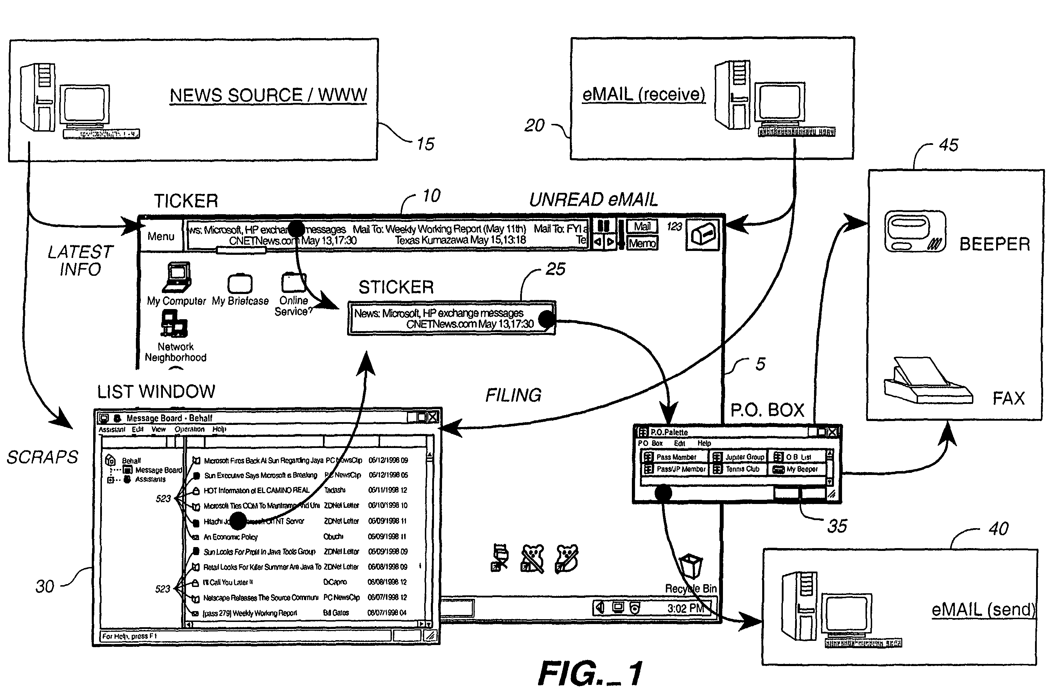

The present invention has general utility as a graphical user interface. However, the present invention is preferably part of a larger information and message management system. FIG. 1 is a schematic diagram showing the computer display 5 of a computer. The display 5 includes what is known as a "ticker" section 10. The ticker 10 typically comprises an upper band-shaped section of the screen. In analogy to a stock-market ticker, the ticker 10 provides a region of the display 5 where a variety of short messages may be displayed. The contents of the ticker 10 preferably move in a wrap-around manner similar to stock tickers to permit the user to see a number of short messages. The contents of ticker 10 may include newly received information from an internet or server site 15. The contents of the ticker 10 may also display newly received and unread e-mail messages 20. Additionally, the ticker 10 may be programmed to display other types of data. The present invention is particularly well-suited to be used with a ticker 10 receiving information from other sources 15, 20. However, many of the benefits of the present invention can be achieved without a ticker 10.

As shown in FIG. 1, the present invention generally comprises an icon that is a displayed message object 25. The message object 25 is preferably displayed on the display 5 as an icon that displays a message title and/or other information related to files associated to the message object 25. In the context of this application, the term "message object" describes an object whose displayed icon has a message title. The message title permits files associated with message object 25 to be displayed by a common theme. In accord with the common definition in the field of computer science, in this application an object is an instance of a class described by its state, behavior, and identity. An instance is commonly defined as a specific example that conforms to a description of a class. A class is commonly defined as a description of the data and behavior common to a collection of objects. Commonly, object-oriented programming is defined as a form of programming in which data are organized into classes of objects, each with a specific set of functions that can be applied to objects.

In accordance with the common practice of naming desktop objects to correspond to real-world objects that perform part of the same function (e.g., desktop folders and trash cans) the inventors describe the message object 25 as a "sticker." The term "sticker" is descriptive of the fact that the message object 25 may perform some of the functions that computer users use self adhesive (sticky) POST-IT™ notes for. For example, POST-IT™ notes are often attached to hard-copy versions of documents to provide a place to attach removable messages. The term "sticker" is also descriptive in the sense that several documents or files may be associated, or "stuck" together by the sticker, in analogy to the way some users of POST-IT™ notes paperclip several related documents together and then attach a POST-IT™ note onto the associated documents. However, while the term "sticker" for message object 25 is partially descriptive of the function of message object 25, the message object 25 of the present invention also performs many functions that conventional POST-IT™ notes do not perform.

The sticker 25 is an object-oriented representation of one or more computer files, documents, or e-mail messages and contains enough information to access the corresponding files/documents/messages. Another way to describe an individual sticker 25 is that a sticker 25 is a user interface container that also has an information description. The interface container corresponding to an individual sticker corresponds to a data element within a larger database for the entire container class. For each container there is an associated instance element with attribute data. Preferably, each instance element has an identification reference code that helps to identify an individual instance element as corresponding to a particular sticker 25. Consequently, means are required to generate and store information defining a container class in the memory of the operating system; means to insert and edit information for a particular container; means to insert and edit the information description of individual sticker containers; and means to access the information contained in a sticker 25 along with its associated information description. Those of ordinary skill in the art of computer science are presumed familiar with the general concept of object-oriented information containers for a desktop system, such as file folder and other similar iconic information management containers, so that a detailed description of the concept of information containers is not required for one of ordinary skill in the art to implement this aspect of the present invention.

A plurality of stickers 25 form a container class. Preferably the sticker containers permit users to organize information in their desktop workspace regardless of how the information is stored in the file system of their operating system. A sticker container 25 may contain data or metadata. For example, a sticker 25 may contain a Word document; a uniform resource locator ("URL") which specifies a particular site and a particular internet resource or file containing a document for a browser to retrieve; or a so-called "short-cut" that is a special type of file that points to another file. The sticker may also contain any form of reference index information that permits a link (or hyperlink) to be established to information contained in other files or documents in order to access the information itself. For example, the sticker may contain a pointer table that generates a pointing signal as required to access information contained in files stored in the memory of an individual computer or on a database network. The information description of the sticker 25 may contain a user-defined message and/or the computer may automatically create an information description that includes information on creator, creation date, and other information. Preferably, the sticker 25 calls application documents as required when the user double clicks or otherwise activates the sticker. Preferably, a plurality of stickers 25 may refer to a subset of the same files, documents, or messages using pointing information.

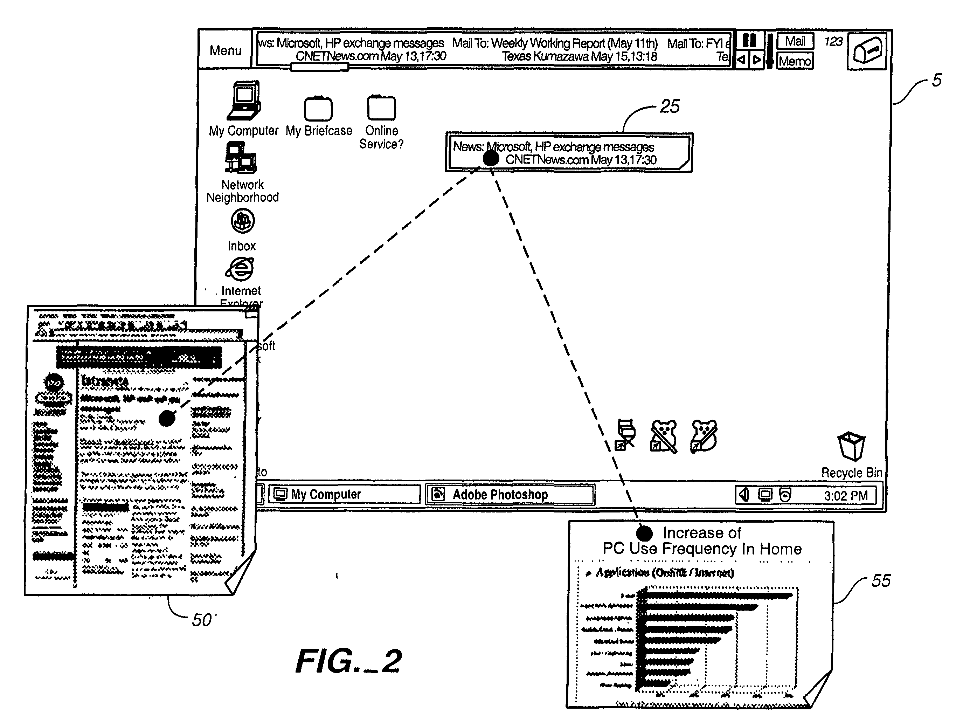

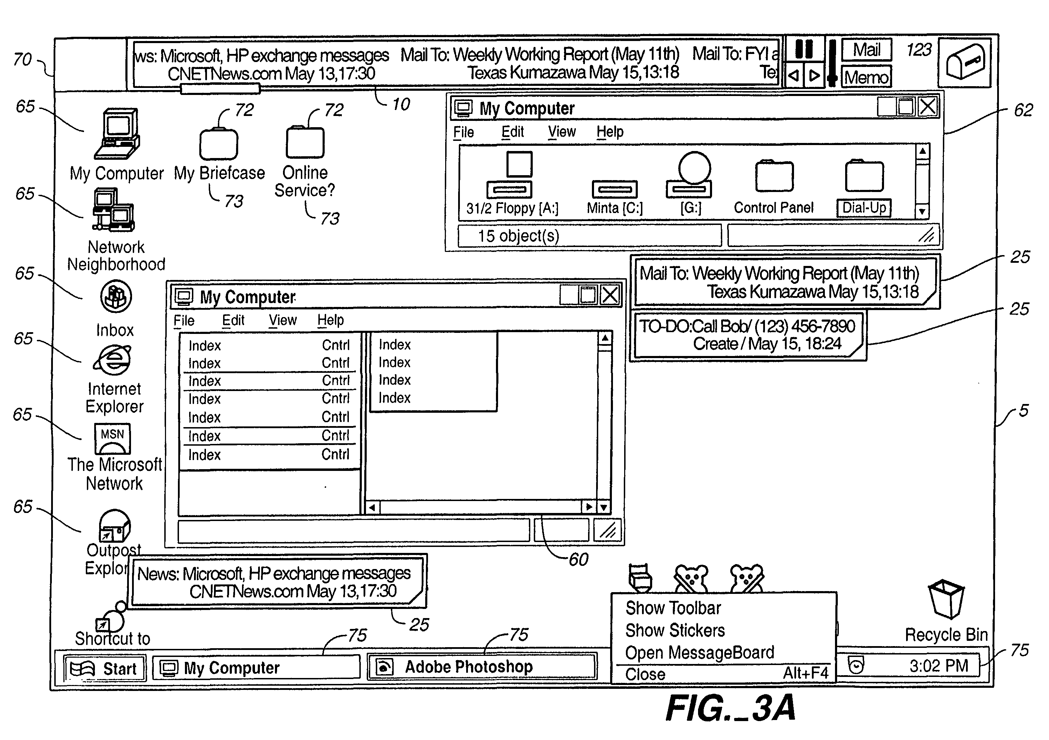

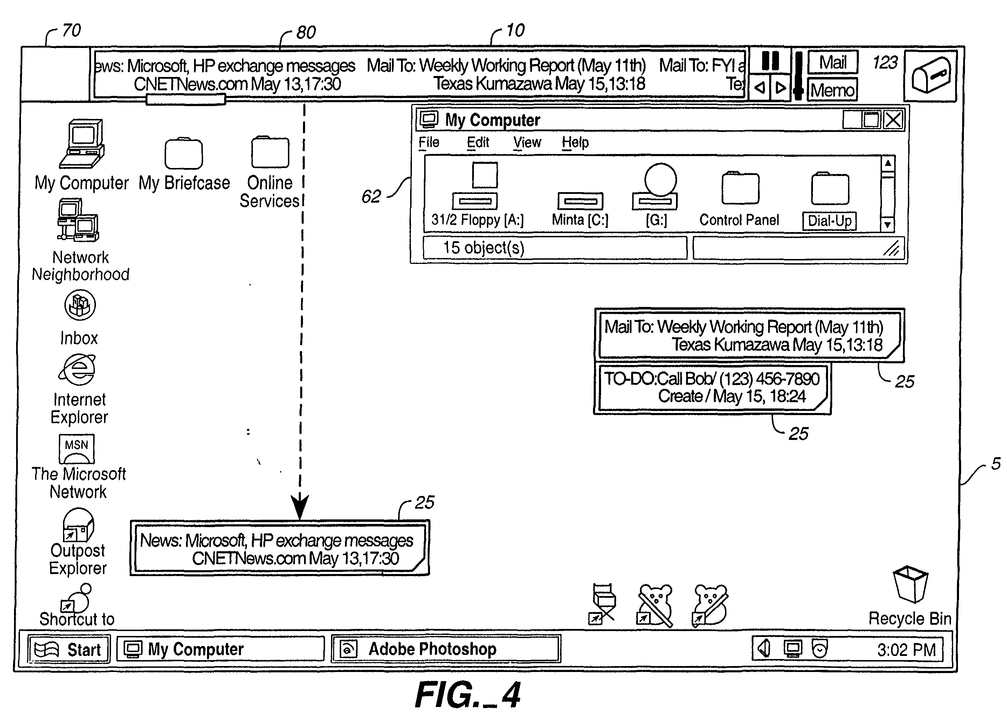

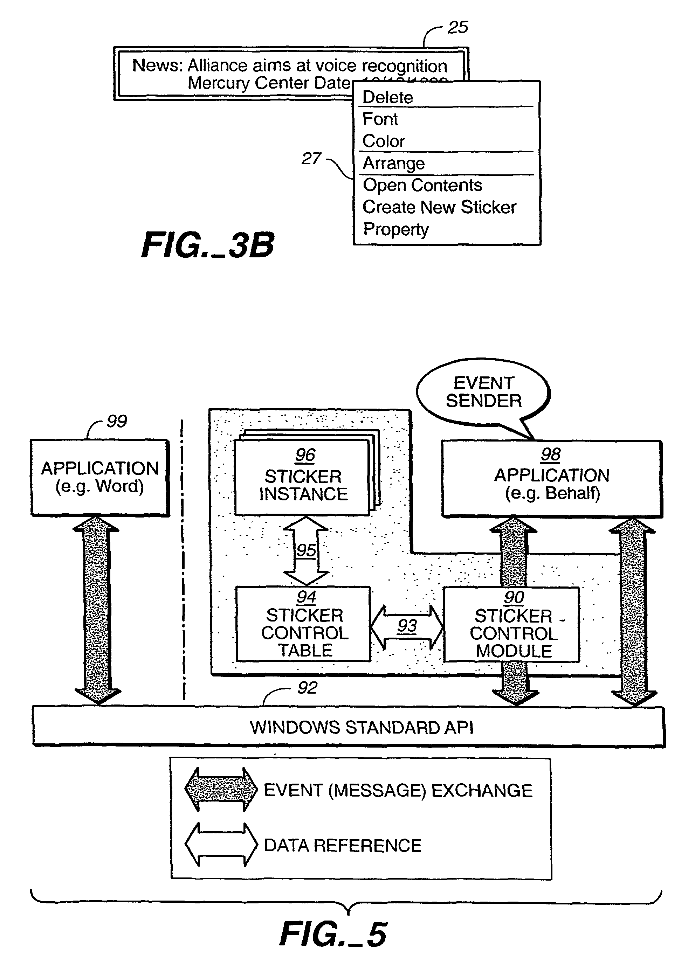

A sticker 25 is particularly useful in assisting a user to efficiently coordinate the use of a plurality of information files such as documents and archived e-mail messages. An individual sticker 25 permits two or more documents, files, or messages to be associated together by one theme. A sticker object 25 may, for example, be used to organize several different documents around a task. For example, as indicated in FIG. 2, a sticker 25 on screen 5 may link a document 50 and graph 55. In FIG. 2, the association between sticker 25 and associated items 50, 55 is indicated by dashed lines. The sticker 25 may be labeled by the user with an organizational message, such as the action-item "To Do: Weekly Report." The user may also include a target date, such as a sticker entitled: "To Do: Weekly Report Due 5/15/1999." Whenever the user opens the sticker message object 25 (e.g., double clicks upon the sticker), the user has access to the associated items 50, 55. One function of sticker 25 is thus to facilitate the organization and management of documents, files, and e-mail messages. Preferably, the user may organize the sticker 25 on their desktop by dragging and dropping the sticker in a location that the user prefers. Preferably, one or more stickers may be placed in an additional display object, such as a folder that serves as a message board 60 (shown in FIG. 3). A message board 60, in analogy to a conventional bulletin board, permits a plurality of stickers to be stored in a window display that can be opened when the user desires to see stickers stored in the message board 60.

The present invention is preferably practiced with the BEHALF application program of Fujitsu, Ltd. As used in this application, BEHALF is the internal development name for a message handling and message assistant application program of Fujitsu, Ltd. The BEHALF application includes a special window 60 that can be used to automatically store a plurality of stickers 25 and may be opened, as required, to view the stickers 25.

As shown in FIG. 3A, in addition to stickers 25, a ticker 10, and open windows 60, 62 the screen display 5 also has a plurality of program icons 65 and a menu button icon 70. Additionally, one or more edges of display 5 may also contain status icons 75 related to the status of one or more programs. Preferably, the sticker 25 has a shape, color, and font size that distinguishes it from conventional folders. As indicated in FIG. 3A, the inventors believe that an object shaped like a narrow (high aspect ratio) box is a preferred shape because it is easily distinguishable from other common icons, such as conventional folder icons 72, while also efficiently using limited desktop space to display a message. Referring to FIG. 3, sticker 25 has a shape in which a large fraction of the area of sticker 25 incorporates a message. Compared to a conventional folder 72, sticker 25 may occupy a much larger area. Moreover, sticker 25 may utilize larger fonts and include a longer string of text than the conventional text portion 73 of a conventional folder 72. Sticker 25 is thus preferably designed with a shape and area that facilitates its function as a message object displaying a thematic message text.

FIG. 3B shows a sticker 25 and a corresponding sticker menu window 27 that may be triggered by double-clicking on the sticker, or by other means. The menu window 27 facilitates changing the display and information properties of a sticker 25. The content menu 27, may for example, permit cutting, copying, deletion, or pasting of the sticker 25. The attributes of sticker 25 preferably may be edited using a user content menu to add, delete, or change reference information attributes, such as deleting or adding a document file to a sticker 25. It is also desirable to be able to change display attributes, such as the font size, type, and color. In addition it is desirable to be able to edit the sticker 25 display color and message title. In addition to changing the sticker attributes using a content menu 27, it is also desirable that the sticker 25 may be moved around the display using a click and drag function. Additionally, it is desirable that the size of the sticker 25 may be adjusted using click and drag means, such as clicking and dragging on a portion of displayed sticker 25 to adjust the size of the sticker. Moreover, it is desirable that the font size of the message title of the sticker 25 automatically adjusts as the area of the sticker 25 is changed.

The ability to conveniently edit a sticker greatly increases its function as an information management tool. For example, a user who is a patent agent may initially create a sticker entitled: "Acme Widget Patent" which associates a draft of a patent application, a technical disclosure, and graphics. The patent agent may receive a subsequent e-mail from the inventor stating that there was a U.S. sale of the invention on October 20^{th} of the previous year, thereby triggering the one-year on-sale bar unless the patent is filed by October 20^{th} of the current year. The patent agent could then edit the sticker to add the new e-mail message. In addition, the sticker title could be changed to "Must File Acme Widget Patent by Oct. 20 To Prevent Statutory Bar." Such a long message title could not be displayed in the title window of a conventional folder. However, the message object of the present invention may have a text string that occupies a substantial width of the computer display screen. Moreover, the font of the sticker could be changed to a red color to emphasize the importance of the filing date. Also, the font size and type of the message text string of sticker 25 could be changed to emphasize the urgency of the task.

A sticker 25 is also useful in assisting a user to rapidly convert incoming e-mail messages into message objects. Preferably, sticker 25 is designed to work with a ticker 10. For example, one way that a ticker 10 may be used with the present invention is if incoming internet documents 15 or e-mail messages 20 displayed on the ticker 10 may be converted into stickers 25. As shown in FIG. 4, a ticker 10 may display incoming news from an internet clipping service, such as a news story entitled: "Microsoft, HP exchange messages." Preferably, the ticker 10 is modified to permit a user to point and click to select ticker items and then have the ticker 10 item converted into a sticker 25, either automatically or by means of a menu command. The BEHALF application program of Fujitsu, Ltd, includes the ability to access ticker items utilizing a click and drag operation. As indicated in FIG. 4, a click and drag function (indicated by the dashed line) is desirable to rapidly convert incoming ticker 10 items into message display objects 25. Moreover, it is desirable to have the capability to further edit the sticker 25, such as by associating additional documents to the sticker formed from a ticker object. For example, suppose the ticker displays an incoming e-mail message "Call Bob," from a superior regarding calling a prospective customer. The computer user may desire to edit the sticker 25 formed from the e-mail message by associating additional documents related to the upcoming telephone call to the sticker 25. Thus, the resulting sticker 25 is not only a reminder of an upcoming action-item but also provides the user with convenient access to the original e-mail message and related client documents when the actual telephone call is made. The sticker 25 combined with a ticker 10 is a preferred method to rapidly and efficiently convert incoming e-mail messages and internet documents into a more useful form.

Additionally, it is desirable to have the ability to conveniently convert archived messages into stickers 25. The Listview window 30 of FIG. 1 is part of the BEHALF application, of Fujitsu, Ltd. The Listview window 30 automatically stores incoming e-mail message and internet documents in the Listview window 30. In a preferred embodiment, archived documents in the Listview window 30 may be converted into stickers using a click and drag operation similar to that used on a ticker 10.

A variety of programming methods to generate and control the placement of icons on a desktop are well-known to those of ordinary skill in the art. For example, the programming methods used to generate folder icons and record the contents of a folder are well known. However, the message display object 25 of the present invention has additional features not found in conventional iconic folders. For example, in a preferred embodiment of the present invention, a sticker 25 does not contain files *per se* but instead contains sufficient information to access associated files. This is desirable, since it reduces the computer memory requirements and the time that it would take to store the actual files in the user interface container that comprises each sticker 25. Additionally, sticker 25 preferably contains significantly larger amounts of textual display information than does to a conventional file folder. Moreover, sticker 25 is also preferably designed to facilitate convenient editing of the information description and associated files contained in each sticker 25. Consequently, the inventors have developed a programming approach specifically addressed to generating and editing a sticker 25 using an application program designed to operate with a Windows standard applied operating programming interface.

FIG. 5 is a block diagram showing a preferred method of generating and utilizing stickers. As indicated in FIG. 5, a conventional word processing application 99 is designed to interact with a Windows standard applied programming interface (API) 92. As indicated in FIG. 5, the sticker control module 90 exchanges event information with an application program 98. The sticker control module 90, in turn, generates message events that are sent to Windows API 92 that permit a message object to be generated on the desktop of the display 5. The application program may be any one of a number of conventional programs. Thus, the block diagram of FIG. 5 provides a general teaching applicable for a variety of object-oriented application programs that may be used with a Windows API 92. However, the BEHALF programming application of Fujitsu, Ltd., is a preferred application program. The BEHALF application includes a dynamic news clipping service that permits a user to clip articles of interest from a plurality of databases on the world wide web. Moreover the BEHALF includes a ticker to display incoming news articles gathered by the dynamic news clipping service. Additionally, the BEHALF application automatically accumulates and preserves down-loaded articles in a Listview window. Moreover, as indicated in FIG. 5, the program can also work directly with the Windows API 92. However, those of ordinary skill in the art of object-oriented programming are presumed capable of modifying other object-oriented application programs to achieve these functions of the BEHALF application. Those of ordinary skill in the art are also presumed familiar with methods to implement a control module function to define a relationship between a user interface function and a database management function of a computer application program 98. Control modules, such as that of U.S. Patent No. 5,430,836, are sometimes used in Windows-based desktop applications for the limited purpose of enabling a variety of computer applications to efficiently work together around a common graphical user interface, such as by facilitating the efficient transfer, management, and display of data between different application programs. Although the control module of the present invention is used for a different function, the general principles of programming a control module are sufficiently well known that one of ordinary skill in the art could implement a control module 90 to interact with another application program besides the BEHALF application.

The sticker control module 90 acts as a message handler between a Windows API 92 and computer application 98 to implement a sticker function in a standard Windows API. The sticker control module 90 requires a means to refer to data in the interface container of an individual sticker 25. As indicated by arrows 93, 95 the sticker control module 90 accesses reference data in sticker control table 94 and sticker instance element 96. Preferably, the sticker control module 90 refers to and updates sticker control table 94 and sticker instance element 96.

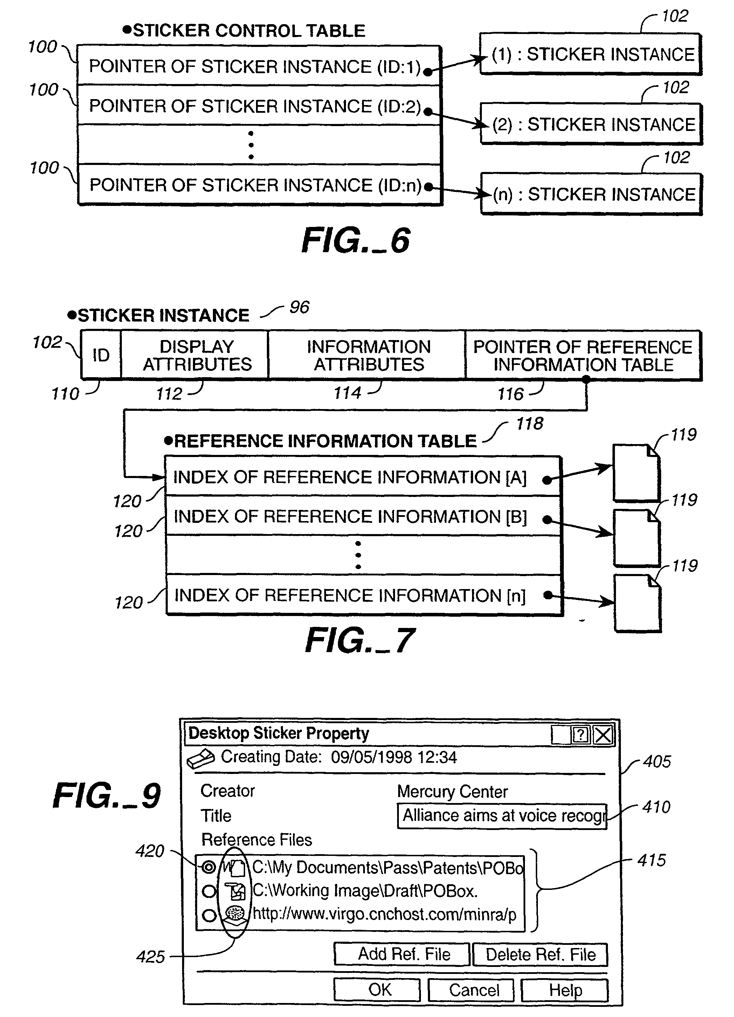

The sticker control table 94 provides reference control information, which is essential since in principle a plurality of stickers 25 may be displayed on the desktop or in a message bulletin board. As shown in FIG. 6, the sticker control table 94 is a registration table to control two or more stickers 25. Sticker control table 94 contains pointing information 100 registered in the sticker control table 94. Pointing information 100 permits sticker control module 90 to access sticker instance information 102 regarding an individual sticker 25.

An individual sticker instance element 102 contains the essential information, or substance of its corresponding message object 25. Consequently, a new individual sticker instance 102 must be created when sticker control module 90 generates a new sticker 25. Also, an individual sticker instance 102 must be updated when the corresponding sticker 25 is edited. The sticker instance element 96 is created as an extended class of a Windows desktop object through a standard Windows system. The sticker instance element 96 also maintains the attributes of a sticker 25.

As shown in FIG. 7, the sticker instance element 96 preferably includes an identification reference (ID) code 110, to enable an individual sticker instance element 102 to be referred to by sticker control table 94. The ID code 110 attribute may be arbitrarily decided upon by the sticker control module 90. The sticker instance element 102 also preferably includes display attributes 112 (which are required when the sticker is displayed on the desktop). The display attributes 112 include the position where the sticker is displayed on the desktop. The display attributes 112 should be automatically updated by sticker control module 90 when the user changes the display position of the sticker 25 on the screen display 5 by dragging the sticker 25 across the screen or into a message board 60. The display attributes 112 also include information on the size of the sticker 25. Preferably, the size of the sticker 25 is automatically calculated from the number of characters in its message title so that the entire message title is displayed. Preferably the user can also change the size of the displayed sticker 25. The display attributes 96 also preferably contain information on the font size, type, and color of sticker 25 in addition to the background color of the sticker.

The sticker instance element 96 also includes information attributes 114. These information attributes 114, preferably include, but are not limited to, the creators name, which may be the user's name or it may be the name of a program that automatically creates a sticker. The information attributes 114 also preferably include the creation date of the sticker. The information attributes 114 also preferably include the message type, such as a keyword that shows the type of message displayed in the Sticker. For example, the message type may be a "memo" or some other message type. Preferably, a plurality of message types may be defined by the user.

Preferably, the information attributes 114 include a user-definable message title that is displayed in the sticker 25. Moreover, it is preferable that there is a default message title for messages created by pointing and dragging items from the ticker 10 or from archived e-mail and internet messages stored in a listview window 30. In particular, it is desirable that the default message title of ticker 10 or listview window 30 is the same as the ticker 10 title.

Although a sticker 25 may be an interface container that contains the actual files, it is preferable that the sticker 25 utilizes an index, pointer, or other short-cut means to provide a means to access the associated files. A pointer method is preferred, since an access pointer can store a file name, URL address, or other information that permits later access to the information of an associated file. The sticker instance 96 thus preferably utilizes a pointer table 116 containing pointer information to access the associated files. The pointer of reference information table 116 contains a reference information table 118 that contains one or more indices to reference information 120. Each index of reference information 120 contains sufficient information to access the indexed file. The reference information table includes an opening flag, which opens reference information by an opening event such as a double click. The reference information table 118 also contains information on the information type, which is set by the sticker control module 90 according to the type of information set in the sticker. This is important in order that the sticker opens the correct application.

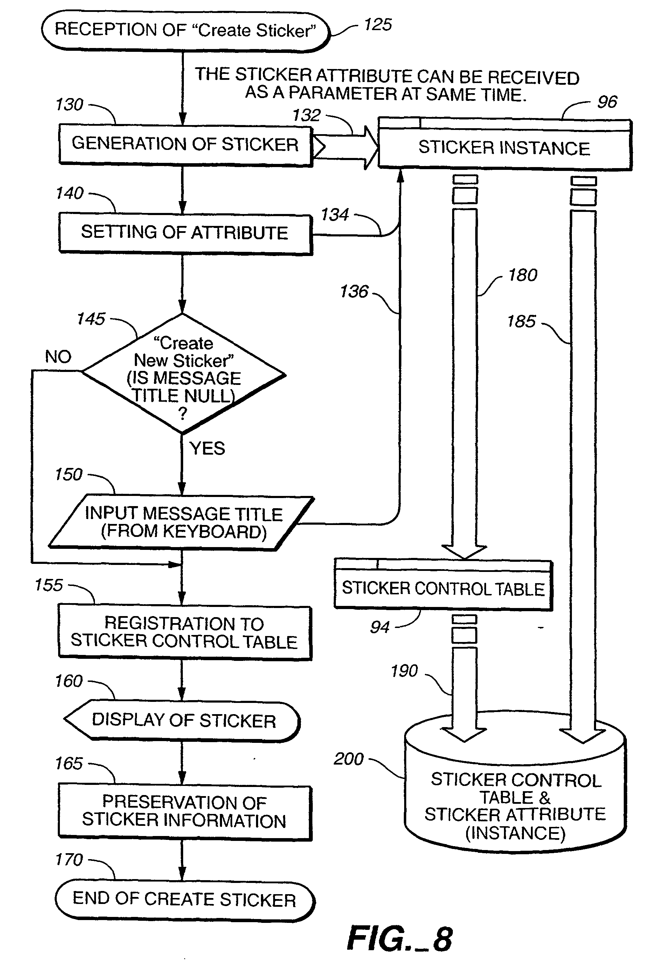

Figure 8 is a flowchart showing a preferred sequence of steps to create a sticker 25. At some initial time, an event occurs which corresponds to a command to "create sticker " 125. This event may be triggered when a user sends the sticker control module 90 an event to create a sticker using the desktop menu 70. However, this event may be triggered by clicking and dragging upon message objects displayed in a ticker 10 or a special folder window, such as the listview window 30.

After a create sticker event 125 is received, the sticker control module 90 begins the generation and processing of a sticker 25. As shown in FIG. 8, after event 125 is received, there is an initial generation of sticker 130. The arrow 132 indicates that there is a corresponding generation of sticker instance 96 when the sticker is generated. This includes the generation of ID data 110. After the initial generation of sticker instance 130, there is an initial setting of attributes 140. For example, the user may add information attributes 114 or reference information table 116 information (e.g., associated files). As indicated by arrow 134, setting the attributes 140 leads to a change in sticker instance 96.

A temporary sticker is displayed on the computer desktop display 5, preferably after the initial setting of attributes 140. For the case of stickers 25 formed by clicking and dragging upon ticker 10 items, the sticker title is preferably automatically the same as the ticker 10 item. However, more generally, stickers 25 that are formed by selecting from a user menu 70 will have a blank (null) message title 145. Consequently, the user needs to input a message title 150 into the keyboard. The message title information becomes part of the sticker instance 96, as indicated by arrow 136.

After the attributes are set, the sticker instance 96 is registered in sticker control table 94 by control module 90, which is indicated by arrow 180. This is indicated by the step of registration to sticker control table 155. The sticker is then displayed 160 on the desktop in its final form. Preferably, the sticker information is preserved 165 automatically on a hard disk or other suitable storage means.

The preferred embodiment of a sticker 25 is one in which the sticker instance 96 utilizes a pointer table 116 that has an index entry 120 for each associated information file. When sticker 25 is opened, such as by double clicking on the displayed sticker 25, the user has access to all associated information contained in sticker 25.

The sticker control module 90 preferably automatically launches an application corresponding to the information type contained in reference information table 116 in order to access the information indexed in table 118 in response to a user double-clicking upon sticker 25. As indicated by the solid arrows in FIG. 5, sticker control module 90 exchanges event message information between application program 98 and Windows API 92. However, as indicated by the icons 119, each file or other form of information indexed by information table 118 may have a different application that generated the information.

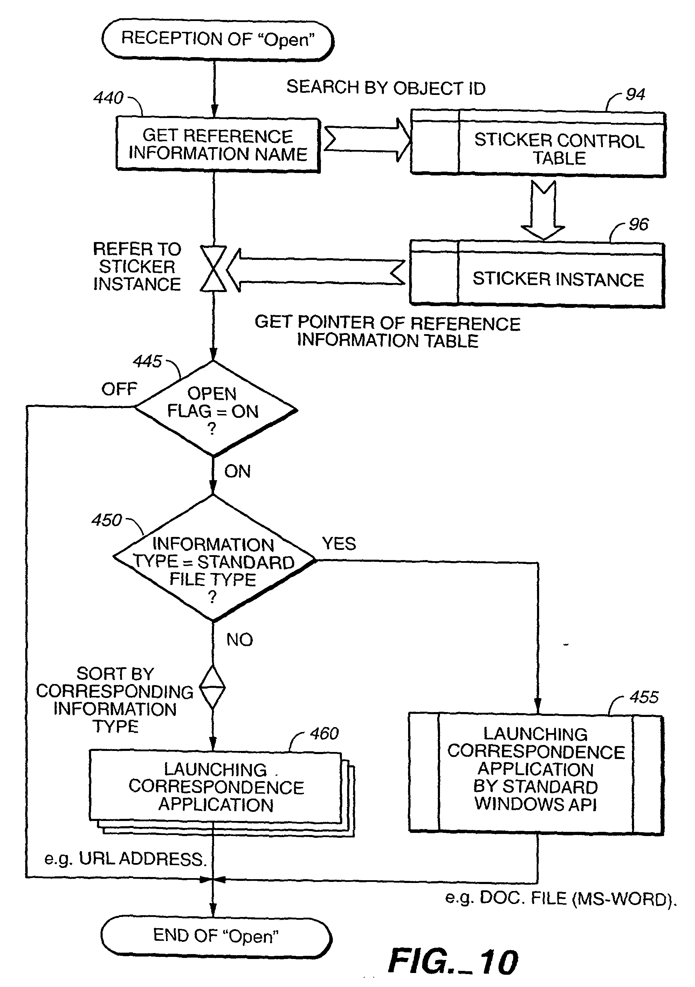

FIG. 9 is a screen display of a preferred sticker property menu window, which may be launched by clicking upon the "property" button of sticker menu 27 of FIG. 3B. As shown in FIG. 9, the sticker property menu 405 includes a message title 410, which may be edited by accessing the sticker property menu. Also, the sticker property menu has a display window showing the associated reference files 415 for one sticker 25. As can be seen in FIG. 9, the sticker property menu 405 also has buttons to add or delete reference files. Additionally, each of the reference files 415 also has a box corresponding to an open flag 420, that the user may select if they wish to open an individual reference file 415 when the sticker files are accessed. The default is preferably for all of the reference files 415 to have their corresponding open flag 420 activated when the sticker files are accessed. As also shown in FIG. 9, the property menu also shows the information type 425 of each file.

FIG. 10 is a flowchart showing a preferred method of opening the associated files contained within a sticker. At some initial time, there is reception of a command to open the sticker files, such as by double clicking upon the sticker or by an open signal triggered by a user menu. The control module 90 then needs to perform a step 440 to get reference information. After the reception of an open signal, such as by double clicking upon a sticker, the sticker control module 90 uses the reference ID code 110 to search the sticker control table 94 to find corresponding sticker instance 96 data. The control module then perform the step 445 of checking whether or not the opening flag is on. If the opening flag 420 of an individual reference file 415 is off, the corresponding file is not opened. However, if the opening flag 420 is on, then the sticker control module 90 needs to check the information type 425 of a reference file 415, as shown by step 450. If the file is a standard file type that may be directly launched by a standard Windows API 92, then the corresponding application for the file is directly opened, as shown in step 455. For example a Word document may have its corresponding Word application program launched. However, as indicated in step 460, the information type of the reference file 415 may not be supported by a Windows standard API. For this case, the control module 90 performs the step of launching the corresponding application according to the information type registered in the sticker control table. For example, if the reference file 415 corresponds to a URL internet address the sticker may access the corresponding internet homepage.

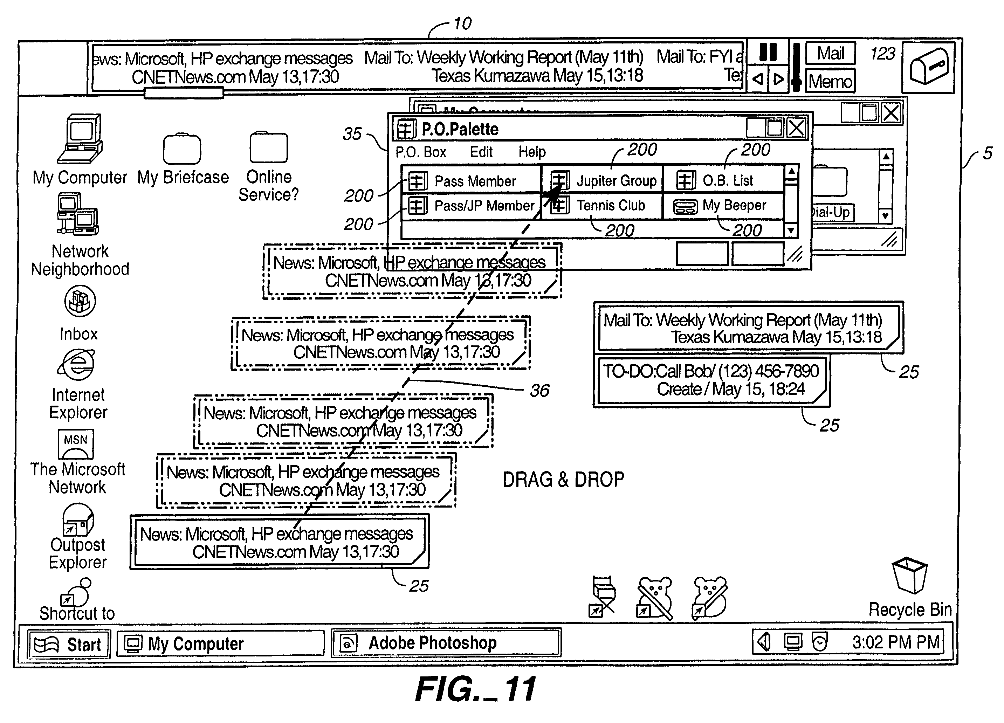

The sticker 25 of the present invention may be used by itself as an information organization tool. However, the sticker 25 of the present invention is preferably used to facilitate the efficient transfer of associated information. As shown in FIG. 11, the transmission of the information contained in sticker 25 is facilitated by a data conversion and transmission object 35. Data conversion and transmission object 35 comprises a display object that may used to facilitate transmitting the contents of a sticker 25 by e-mail 40 or by non e-mail means 45, such as by FAX, the transmission of a voice synthesized message transmitted by telephone, or the transmission of text to a beeper, portable pager unit, or other unit that is designed to receive text messages sent by wireless communication means.

Data conversion and transmission unit 35 is an object icon that can be accessed by the menu and which preferably permits the user to register a plurality of e-mail addresses to form a local mailing list. The data conversion and transmission unit 35, which the inventors also describe as a post-office (P.O.) box palette, preferably permits a user to drag and drop a sticker 25 onto a local user address list 200. In accord with the convention of naming iconic objects in accord with their function (e.g., folder and trash cans), the term "P.O. palette" describes an object that has a plurality of symbols that perform a post-office like function in terms of transmitting messages. Moreover, in common usage, the word "palette" refers to an object that has a range of properties, such an artist's paint palette. The term "P.O. palette" is thus descriptive of the function data conversion and transmission unit 35 has in transmitting stickers 25 with potentially a wide range of properties.

As indicated by the dashed arrow 36 in FIG. 11, a user preferably clicks on a sticker 25 and drags and drops the sticker onto a user address list 200 in data and transmission object 35. Preferably the P.O. palette 35 permits a user to program a plurality of different user group post boxes 200. By performing a drag and drop function, the sticker 25 may be brought into one of the post boxes 200 of data conversion and transmission unit 35.

The combination of the P.O. palette 35 and the sticker 25 facilitates sending associated information in a quick and efficient manner, particularly for groups to whom the user regularly sends information. Conventional e-mail systems do not permit a drag and drop mode of sending associated files to preselected user groups. Users must typically enter an e-mail program; select a user list of e-mail addressees; and then append the desired files/documents to the e-mail message by specifying the appending documents as attachments. Moreover, there is no means to automatically provide a title and/or comments regarding the appended documents In the present invention, however, the P.O. palette 35 permits a drag and drop method of sending associated files. Preferably, an individual P.O. box 200 may also be programmed to automatically send a comment to members on the address list of the P.O. box 200. For example, a P.O. Box 200 entitled "User support group" could be addressed to members of a technical support group. When the user drags and drops a sticker 25 onto the "User support group" P.O. box 200, the associated files of sticker 25 are transmitted to the user support group. However, the title of the sticker 25 may also be sent. Moreover, the P.O. box 200 may be programmed to send an additional comment to members of the address list 200, such as "Enclosed are associated documents for the monthly newsletter of the user support group."

When a sticker 25 is dragged and dropped into data conversion and transmission unit 35 the user may select that the file be transmitted to individuals on their local address list and/or to other users. If data conversion and transmission unit 35 transmits the sticker 25 information to an e-mail addressee, the contents of the sticker 25 are sent as an e-mail attachment.

Data conversion and transmission unit 35 also preferably permits a user to transmit sticker 25 information by other than e-mail means. Computer users often have the need to send associated information to others in a variety of forms. For example, a manager may wish to send his employees news of an urgent upcoming meeting and also include a proposed meeting agenda and documents related to the meeting, such as a news release describing a competitor's new product line. It can be time consuming to append multiple documents to an e-mail message. Moreover, it is desirable to be able to quickly send the same information by a plurality of different transmission means. For example, in many cases a user also desires to send FAX copies of the documents to those who do not have access to e-mail. Additionally, users often desire to send others notification that an urgent e-mail has been sent, often by a telephone call or beeper text message (e.g., a message such as "Tom: I have sent you an urgent e-mail message. Please read it ASAP"). The total time required to send e-mail messages; send FAX copies to non-e-mail users; and to make confirmation calls can be significant.

Data conversion and transmission unit 35 preferably permits a user to register information on FAX numbers, telephone numbers, and beeper numbers of addressees in one or more P.O. Boxes 200. Preferably, the data conversion and transmission unit 35 automatically converts portions of the sticker 25, such as the message title, into a form suitable for transmission by non e-mail means for those addresses having non e-mail addresses. For example, suppose Mr. Jones sends an e-mail message on January 1, 1999 to several users. Mr. Jones can create a sticker entitled, "Urgent meeting Tuesday at 3:00 P.M." If Mr. Jones desires, he can associate information related to the meeting to the sticker so that his e-mail addresses-receive an attached copy of the relevant materials. However, Mr. Jones may also want to alert colleagues that are out of the office that there is an upcoming meeting and/or that he has sent them an urgent e-mail with critical information. Mr. Jones may have the beeper, FAX, or telephone numbers of several of his colleagues who are out of the office. This information may be stored in one or more P.O. boxes 200 of P.O. pallette 35 or this information may be temporarily added to an address list 200 at the time the information is sent. For example, one of Mr. Jones colleagues may be staying at a hotel with a FAX machine; another colleague may be away on business but regularly checking her voicemail messages; and still another colleague may be away on local business but is accessible by a beeper with a limited text capability. All Mr. Jones has to do is add the non-email addresses to one or more P.O. boxes 200. When the sticker is dragged and dropped onto the corresponding P.O. box 200, data conversion and transmission unit 35 automatically converts the data of the sticker 25 into the proper form suitable for the means of transmission. For example, for the case of FAX transmission, the data conversion and transmission unit 35 preferably automatically converts the title and attached document of the sticker into a picture form suitable for FAX transmission and prepares a cover sheet with the title of the sticker and information on the creation date and the name of the sender. For the case of a beeper, preferably the message part of the sticker is transmitted along with information on the creation date/creator. For example, a beeper recipient may receive a text message, "You have received an e-mail message from Mr. Jones sent on January 1, 1999 and entitled: Urgent meeting Tuesday at 3:00 P.M." A similar message may also be created by a voice synthesizer for transmission by telephone.

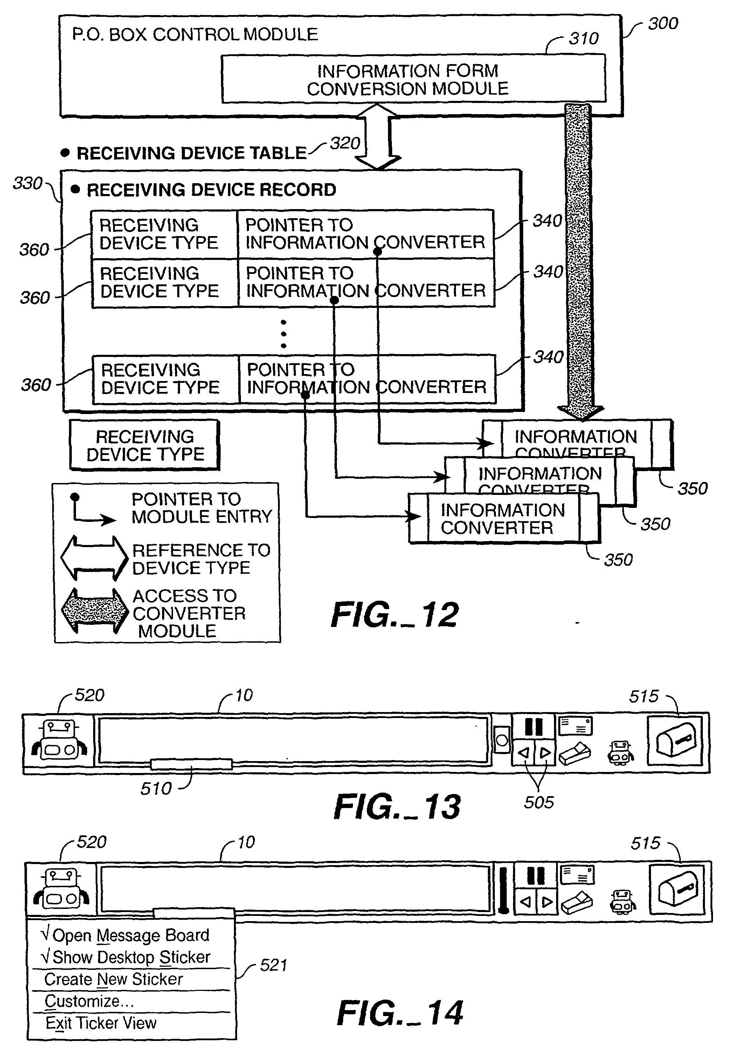

Conventional e-mail systems are not designed to automatically transmit the contents of e-mail messages to non e-mail addressees. Consequently, as shown in FIG. 12, the inventors have developed a P.O. box control module 300 which is used to facilitate data conversion of a sticker 25 appropriate for the means of data transmission (i.e., e-mail, FAX, beeper, or telephone). Inside of the P.O. box control module 300 is an information form conversion module 310. The information form conversion module 310 directs the conversion of the information of the sticker 25 using information registered in a receiving device table 320. The receiving device table 320 contains receiving device records 330 which contain pointers 340 to the appropriate information converter 350 appropriate for a particular receiving device type 360. For example, for the case of e-mail messages, the information form conversion module 310 references the fact that the receiving device type 360 is an e-mail address. The pointer 340 then directs the information form conversion module 310 to access an information converter 350 appropriate for e-mail transmission (e.g., the documents of the sticker are appended to the e-mail message and/or URL addresses are converted into a form suitable for appending to the e-mail message). For the case of FAX transmission, the information form conversion module 310 refers to the receiving device table 320 for a receiving device type 360 comprising a FAX machine. The pointer 340 directs the information form conversion module 310 to access an information converter 350 appropriate for FAX transmission (e.g., transmitting the documents as picture images). For the case of beeper transmission, the information form conversion module 310 refers to the fact that the receiving device type 330 is a machine. The pointer 340 refers the information form conversion module 310 to an information converter 350 appropriate for a beeper (e.g., transmission of text that includes the sticker title or e-mail title plus information on creation date and creator).

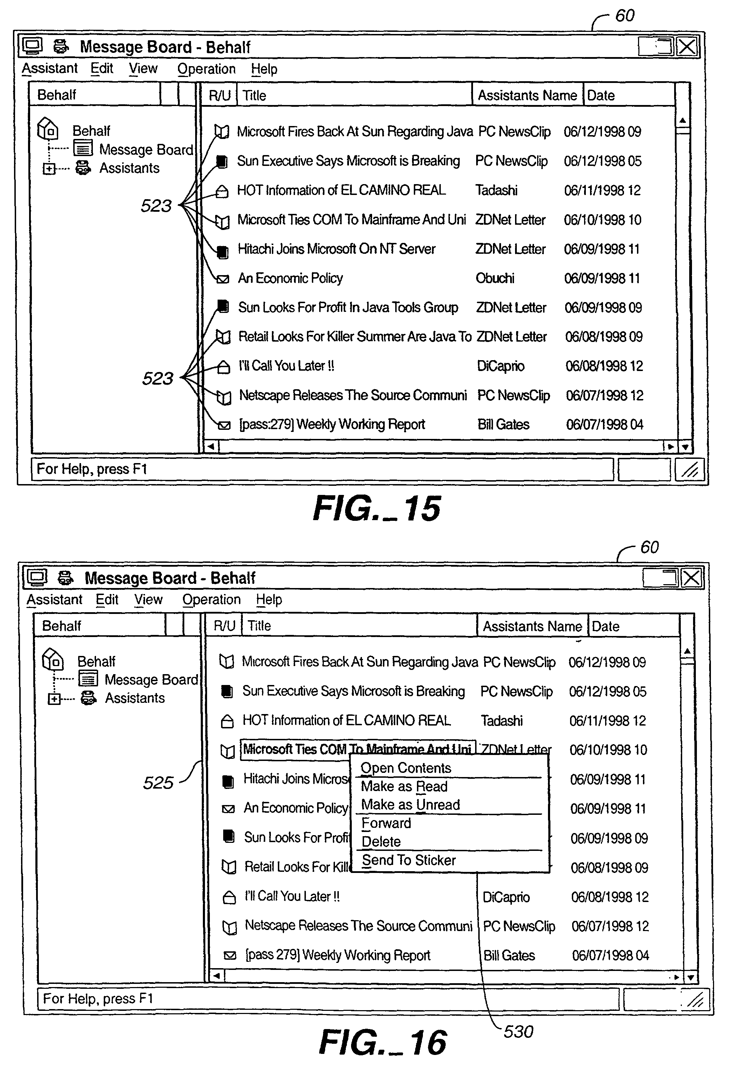

In a preferred embodiment, sticker 25 works together interactively with a P.O. palette 35, listview 30, message board 60, and ticker 10 as part of a larger information and message management system. FIG. 13 shows a preferred embodiment of a ticker 10. The ticker 10 preferably includes control buttons and bars 505, 510 to adjust the position and/or rate at which items move across the ticker 10. The ticker 10 may have a button icon 515 that automatically opens the P.O. palette 35. The ticker 10 preferably includes a menu button 520. As shown in FIG. 14, the opened ticker menu 521 may have a command corresponding to "Create New Sticker." The ticker menu 521 preferably also has commands that permit a message board to be opened up. As indicated in FIG. 15, the message board 60 preferably includes files that are archived in the message board. In the BEHALF application, one or more assistants, such as a news clipping service, automatically archive files 523 in the message board for later retrieval and/or conversion into a sticker 25. As indicated in FIG. 16, preferably the user can convert a file stored in the message board by doubling clicking upon the item and/or utilizing a content menu. As shown in FIG. 16, a user menu permits an archived file 525 to be converted into a sticker using a menu 530. The BEHALF application has features that permit a user to adjust the length of time for which articles and other materials acquired by assistants, such as a news clipping service, are stored in the message board 60. The BEHALF application also includes a scrap-book file that, as it name implies, performs an additional storage function, such as temporarily saving "deleted" ticker items.

The combination of features of the present invention permits the user to efficiently organize and utilize a stream of incoming information. Moreover, the present invention permits a user to efficiently transmit received and/or processed information. For example, a user may convert incoming ticker items 80 into a sticker 25. The user may then optionally edit the resulting sticker 25, such as by associating additional documents to the sticker 25 or by changing its message title. The user may then transmit the sticker to others by performing a drag and drop function onto one or more P.O. boxes 200 in the P.O. palette 35. This may comprise both e-mail and non e-mail addresses.

The present invention performs an information organization, management, and transmission function that is more complex and more time efficient than conventional methods. The benefits of the present invention are particularly great for those computer users who receive a plurality of e-mail messages and internet files every day. For high-use users, such as those who receive more than about twenty e-mail messages each day and/or a corresponding number of internet files, even small reductions in the amount of time it takes to organize and/or transmit each individual incoming file have a substantial cumulative effect.

The present invention also performs functions that are not possible with conventional iconic folders. For example, the present invention performs part of the function of a conventional Post-It™ note in terms of providing a message space. Moreover, the ability to edit the sticker 25, such as by changing message title content dates and/or changing display attributes such as font size and color, facilitates using the sticker 25 as a time-management or project-management aid, similar to a Day-Timer™. However, the data conversion function of the P.O. palette 35 also permits the present invention to function like a personal assistant because P.O. palette 35 eliminates the need to have an individual FAX hard copies of associated files and/or make separate arrangements to contact recipients by beeper or telephone. Moreover, the ability to rapidly convert ticker items 80 or items stored in a Listview window 30 into stickers further enhances the information management benefits of the present invention. The combination of features of the present invention is particularly advantageous for computer users who must efficiently organize and manage large numbers of incoming internet 15 or intranet 20 messages each day.

## Claims

1. A system for displaying iconic message objects (25) of data files associated by a common theme in a graphical user interface on a computer with a display (5), comprising:
message object control module means (90) for generating and editing a message object information container in response to a message object generation event;
message object instance element means (96) for storing in said information container attribute data including information attributes (114), display attributes (112), and a pointer table (116) containing sufficient information to access associated files (50, 55) in said message object information container;
display means for displaying said information container on said graphical user interface as a message object icon (25) with an information description;
access means for accessing said associated files of said displayed message object icon (25) in response to an access event;
iconic drag and drop data conversion and transmission means (35) for dragging said displayed message object icon (25) onto an address list (200), converting the data of said message object into a form suitable for transmission to addresses on said address list, and transmitting said converted data to individuals on said address list;
ticker means for generating a ticker object (10) based on a message received from outside the computer; and
ticker conversion means responsive to a user clicking and dragging on a ticker object (10) to initiate the generation of a message object (25) using the information contained in the ticker object (10).

2. The system of claim 1, further comprising:
message object control table means (94) for storing control table pointing data (100) for each said message object (25); and
associating means for associating each said message object (25) generated by said message object control module means (90) with an individual message object instance element (96, 102) by control table pointing data; wherein
said display means displays each said message object (25) with a message title acquired from said message object instance element (96, 102).

3. Computer software which when loaded into an information processing apparatus implements a system according to claim 1 or 2.

4. A computer-readable storage medium storing computer software according to claim 3.

5. A method of displaying iconic message objects (25) of data files associated by a common theme in a graphical user interface on a computer with a display (5), comprising:
a message object control step of generating and editing a message object information container in response to a message object generation event;
a message object instance element step of storing in said information container attribute data including information attributes (114), display attributes (112), and a pointer table (116) containing sufficient information to access associated files (50, 55) in said message object information container;
a display step of displaying said information container on said graphical user interface as a message object icon (25) with an information description;
an accessing step of accessing said associated files of said displayed message object icon (25) in response to an access event;
an iconic drag and drop data conversion and transmission step of dragging said displayed message object icon (25) onto an address list (200), converting the data of said message object into a form suitable for transmission to addresses on said address list (200), and transmitting said converted data to individuals on said address list;
a step of generating a ticker object (10) based on a message received from outside the computer; and
a ticker conversion step of, in response to a user clicking and dragging on a ticker object, initiating the generation of a message object (25) using the information contained in the ticker object (10).

6. The method of claim 5, further comprising:
a step of recording a message object control table means (94) storing control table pointing data (100) for each said message object (25); and
an associating step of associating each said message object (25) generated by said message object control module means with an individual message object instance element (96, 102) by control table pointing data; wherein
said display step displays each said_message object (25) with a message title acquired from said message object instance element (96, 102).

## Patentansprüche

1. System zum Anzeigen von ikonischen Mitteilungsobjekten (25) von Datendateien, die einem gemeinsamen Thema zugeordnet sind, auf einer graphischen Benutzeroberfläche auf einem Computer mit einem Display (5), mit:
einem Mitteilungsobjekt-Steuermodulmittel (90) zum Erzeugen und Editieren eines Mitteilungsobjekt-Informationsbehälters als Antwort auf ein Mitteilungsobjekt-Erzeugungsereignis;
einem Mitteilungsobjekt-Inscanzelementmittel (96) zum Speichern, in dem Informationsbehälter, von Attributdaten, die Informationsattribute (114), Anzeigeattribute (112) und eine Zeigertabelle (116) umfassen, die genügend Informationen zum Zugreifen auf zugeordnete Dateien (50, 55) in dem Mitteilungsobjekt-Informationsbehälter enthält;
einem Anzeigemittel zum Anzeigen des Informationsbehälters auf der graphischen Benutzeroberfläche als Mitteilungsobjekt-Ikon (25) mit einer Informationsbeschreibung;
einem Zugriffsmittel zum Zugreifen auf die zugeordneten Dateien des angezeigten Mitteilungsobjekt-Ikons (25) als Antwort auf ein Zugriffsereignis;
einem Konvertierungs- und Übertragungsmittel von ikonischen Drag-and-Drop-Daten (35), zum Ziehen des angezeigten Mitteilungsobjekt-Ikons (25) auf eine Adressenliste (200), Konvertieren der Daten des Mitteilungsobjektes in eine Form, die zur Übertragung zu Adressen auf der Adressenliste geeignet ist, und Übertragen der konvertierten Daten zu individuellen Adressen auf der Adressenliste;
einem Ticker-Mittel zum Erzeugen eines Ticker-Objektes (10) auf der Basis einer Mitteilung, die von außerhalb des Computers empfangen wird; und
einem Ticker-Konvertierungsmittel, das auf einen Nutzer reagiert, der ein Ticker-Objekt (10) anklickt und zieht, um die Erzeugung eines Mitteilungsobjektes (25) unter Verwendung der in dem Ticker-Objekt (10) enthaltenen Informationen zu initiieren.

2. System nach Anspruch 1, ferner mit:
einem Mitteilungsobjekt-Steuertabellenmittel (94) zum Speichern von Steuertabellen-Zeigedaten (100) für jedes Mitteilungsobjekt (25); und
einem Zuordnungsmittel zum Zuordnen jedes Mitteilungsobjektes (25), das durch das Mitteilungsobjekt-Steuermodulmittel (90) erzeugt wird, zu einem individuellen Mitteilungsobjekt-Instanzelement (96, 102) durch Steuertabellen-Zeigedaten; bei dem
das Anzeigemittel jedes Mitteilungsobjekt (25) mit einem Mitteilungstitel anzeigt, der von dem Mitteilungsobjekt-Instanzelement (96, 102) erfaßt wird.

3. Computersoftware, die dann, wenn sie in eine Informationsverarbeitungsvorrichtung geladen ist, ein System nach Anspruch 1 oder 2 implementiert.

4. Computerlesbares Speichermedium, das Computersoftware nach Anspruch 3 speichert.

5. Verfahren zum Anzeigen von ikonischen Mitteilungsobjekten (25) von Datendateien, die einem gemeinsamen Thema zugeordnet sind, auf einer graphischen Benutzeroberfläche auf einem Computer mit einem Display (5), mit:
einem Mitteilungsobjekt-Steuerschritt zum Erzeugen und Editieren eines Mitteilungsobjekt-Informationsbehälters als Antwort auf ein Mitteilungsobjekt-Erzeugungsereignis;
einem Mitteilungsobjekt-Instanzelementschritt zum Speichern, in dem Informationsbehälter, von Attributdaten, die Informationsattribute (114), Anzeigeattribute (112) und eine Zeigertabelle (116) umfassen, die genügend Informationen zum Zugreifen auf zugeordnete Dateien (50, 55) in dem Mitteilungsobjekt-Informationsbehälter enthält;
einem Anzeigeschritt zum Anzeigen des Informationsbehälters auf der graphischen Benutzeroberfläche als Mitteilungsobjekt-Ikon (25) mit einer Informationsbeschreibung;
einem Zugriffsschritt zum zugreifen auf die zugeordneten Dateien des angezeigten Mitteilungsobjekt-Ikons (25) als Antwort auf ein Zugriffsereignis;
einem Konvertierungs- und Übertragungsschritt von ikonischen Drag-and-Drop-Daten, zum ziehen des angezeigten Mitteilungsobjekt-Ikons (25) auf eine Adressenliste (200), Konvertieren der Daten des Mitteilungsobjektes in eine Form, die zur Übertragung zu Adressen auf der Adressenliste (200) geeignet ist, und Übertragen der konvertierten Daten zu individuellen Adressen auf der Adressenliste;
einem Schritt zum Erzeugen eines Ticker-Objektes (10) auf der Basis einer Mitteilung, die von außerhalb des Computers empfangen wird; und
einem Ticker-Konvertierungsschritt zum Initiieren, als Antwort auf das Anklicken und Ziehen eines Ticker-Objektes durch einen Nutzer, der Erzeugung eines Mitteilungsobjektes (25) unter Verwendung der Informationen, die in dem Ticker-Objekt (10) enthalten sind.

6. Verfahren nach Anspruch 5, ferner mit:
einem Schritt zum Aufzeichnen eines Mitteilungsobjekt-Steuertabellenmittels (94), das Steuertabellen-Zeigedaten (100) speichert, für jedes Mitteilungsobjekt (25); und
einem Zuordnungsschritt zum zuordnen jedes Mitteilungsobjektes (25), das durch das Mitteilungsobjekt-Steuermodulmittel erzeugt wird, zu einem individuellen Mitteilungsobjekt-Instanzelement (96, 102) durch Steuertabellen-Zeigedaten; bei dem
der Anzeigeschritt jedes Mitteilungsobjekt (25) mit einem Mitteilungstitel anzeigt, der von dem Mitteilungsobjekt-Instanzelement (96, 102) erfaßt wird.

## Revendications

1. Système pour afficher des objets de message par icône (25) de fichiers de données qui sont associés par un thème commun dans une interface utilisateur graphique sur un ordinateur à l'aide d'un affichage (5), comprenant :
un moyen de module de commande d'objet de message (90) pour générer et éditer un conteneur d'information d'objet de message en réponse à un événement de génération d'objet de message ;
un moyen d'élément d'exemple d'objet de message (96) pour stocker dans ledit conteneur d'information des données d'attribut incluant des attributs d'information (114), des attributs d'affichage (112) et une table de pointeurs (116) qui contient une information suffisante pour accéder à des fichiers associés (50, 55) dans ledit conteneur d'information d'objet de message ;
un moyen d'affichage pour afficher ledit conteneur d'information sur ladite interface utilisateur graphique en tant qu'icône d'objet de message (25) avec une description d'information ;
un moyen d'accès pour accéder auxdits fichiers associés de ladite icône d'objet de message affichée (25) en réponse à un événement d'accès ;
un moyen de conversion et de transmission de données de traînée et de lâcher par icône (35) pour traîner ladite icône d'objet de message affichée (25) sur une liste d'adresses (200), pour convertir les données dudit objet de message selon une forme qui convient pour une transmission sur des adresses sur ladite liste d'adresses et pour transmettre lesdites données converties jusqu'à des éléments individuels sur ladite liste d'adresses ;
un moyen de bandeau pour générer un objet de bandeau (10) sur la base d'un message qui est reçu depuis l'extérieur de l'ordinateur ; et
un moyen de conversion de bandeau qui est sensible à un effet de cliquage et de traînée par utilisateur sur un objet de bandeau (10) pour initier la génération d'un objet de message (25) en utilisant l'information qui est contenue dans l'objet de bandeau (10).

2. Système selon la revendication 1, comprenant en outre :
un moyen de table de commande d'objet de message (94) pour stocker des données de pointage de table de commande (100) pour chaque dit objet de message (25) ; et
un moyen d'association pour associer chaque dit objet de message (25) qui est généré par ledit moyen de module de commande d'objet de message (90) avec un élément d'exemple d'objet de message individuel (96, 102) au moyen de données de pointage de table de commande,
dans lequel :
ledit moyen d'affichage affiche chaque dit objet de message (25) avec un titre de message qui est acquis à partir dudit élément d'exemple d'objet de message (96, 102).

3. Logiciel d'ordinateur qui, lorsqu'il est chargé dans un appareil de traitement d'information, met en oeuvre un système selon la revendication 1 ou 2.

4. Support de stockage lisible par ordinateur qui stocke un logiciel d'ordinateur selon la revendication 3.

5. Procédé d'affichage d'objets de message par icône (25) de fichiers de données qui sont associés par un thème commun dans une interface utilisateur graphique sur un ordinateur à l'aide d'un affichage (5), comprenant :
une étape de commande d'objet de message consistant à générer et à éditer un conteneur d'information d'objet de message en réponse à un événement de génération d'objet de message ;
une étape d'élément d'exemple d'objet de message consistant à stocker dans ledit conteneur d'information des données d'attribut incluant des attributs d'information (114), des attributs d'affichage (112) et une table de pointeurs qui contient une information suffisante pour accéder à des fichiers associés (50, 55) dans ledit conteneur d'information d'objet de message ;
une étape d'affichage consistant à afficher ledit conteneur d'information sur ladite interface utilisateur graphique en tant qu'icône d'objet de message (25) avec une description d'information ;
une étape d'accès consistant à accéder auxdits fichiers associés de ladite icône d'objet de message affichée (25) en réponse à un événement d'accès ;
une étape de conversion et de transmission de données de traînée et de lâcher par icône consistant à traîner ladite icône d'objet de message affichée (25) sur une liste d'adresses (200), à convertir les données dudit objet de message selon une forme qui convient pour une transmission sur des adresses sur ladite liste d'adresses (200) et à transmettre lesdites données converties à des éléments individuels sur ladite liste d'adresses ;
une étape consistant à générer un objet de bandeau (10) sur la base d'un message qui est reçu depuis l'extérieur de l'ordinateur ; et
une étape de conversion de bandeau consistant à, en réponse à un effet de cliquage et de traînée par l'utilisateur sur un objet de bandeau, initier la génération d'un objet de message (25) en utilisant l'information qui est contenue dans l'objet de bandeau (10).

6. Procédé selon la revendication 5, comprenant en outre :
une étape d'enregistrement d'un moyen de table de commande d'objet de message (94) qui stocke des données de pointage de table de commande (100) pour chaque dit objet de message (25) ; et
une étape d'association qui associe chaque dit objet de message (25) qui est généré par ledit moyen de module de commande d'objet de message avec un élément d'exemple d'objet de message individuel (96, 102) au moyen des données de pointage de table de commande ;
dans lequel :
ladite étape d'affichage affiche chaque dit objet de message (25) avec un titre de message qui est acquis à partir dudit élément d'exemple d'objet de message (96, 102).
